# EUROPEAN PATENT SPECIFICATION

(11) **EP 4 387 921 B1**
(45) Date of publication and mention of the grant of the patent: **09.07.2025**
(21) Application number: 22768671.4
(22) Date of filing: 19.08.2022
(51) Int. Cl.: B67D 1/00, F16L 59/18

(54) **ENCLOSURE FOR HOUSING COMPONENTS OF A BEVERAGE DISPENSING SYSTEM**
GEHÄUSE ZUR AUFNAHME VON KOMPONENTEN EINES GETRÄNKEAUSGABESYSTEMS
ENCEINTE POUR LOGER DES COMPOSANTS D'UN SYSTÈME DE DISTRIBUTION DE BOISSON

(30) Priority: 20.08.2021 GB 202112010
(43) Date of publication of application: 26.06.2024
(73) Proprietor: Heineken UK Limited, Edinburgh EH12 9JZ (GB)
(72) Inventor: GRAY, Simon, Edinburgh Lothian EH12 9JZ (GB); BRIANT, Stuart, Edingburgh Lothian EH12 9JZ (GB)
(74) Representative: Mewburn Ellis LLP
(86) International application number: PCT/EP2022/073252
(87) International publication number: WO 2023/021207

(56) References cited:
- EP-A1- 3 162 757
- DE-U1- 202010 004 970
- DE-U1- 202013 002 350
- FR-A1- 2 559 874
- US-A- 3 724 491
- US-A1- 2014 069 954

## Description

### Technical Field

The present disclosure relates to an enclosure for housing components of a beverage dispensing system and a beverage system include such an enclosure. The disclosure is particularly, but not exclusively, relevant to beer dispensing systems.

### Background

Beverage dispensing systems are known for dispensing draught beverages. In such systems, the beverage is typically stored at a beverage source (e.g. a keg) that is remote from a dispensing site (e.g. a tap) and is transferred on demand to the dispensing site. Such transfer of beverage is often provided by a pressurised gas system.

In some systems, a primary gas line may supply gas to a plurality of e.g. kegs (for moving beverage along respective beverage lines). In some cases, each keg may be provided with a gas exchange component (or unit) that takes a portion of the gas in the primary gas line to feed to the keg (at reduced pressure and at a pressure that is particularly suited to the beverage stored in the corresponding keg).

To further facilitate transfer of beverage from the keg to the tap, it is also known to provide a mechanical pump on the beverage line, which can be provided in addition to the pressurised gas system.

To maintain the beverage at a desirable temperature as it travels from the beverage source to the dispensing site, it is known to provide a cooler. In some systems, the beverage line passes through the cooler itself. Alternatively or additionally, a cooling line may be provided that extends along the beverage line to cool the beverage line. By cooling the beverage in this way, not only is it supplied at a desired temperature, but it may also be maintained at a temperature at which microorganism growth is limited. Such microorganism growth can spoil the beverage, resulting in a reduction of quality and taste.

Some systems also include means for determining when a keg is empty and shutting off supply of beverage from the keg. This can help to minimise the amount of gas or foam that enters the beverage line and allows quick replacement of the keg.

The various components required to operates a beverage system (such as those discussed above) must be located at the site of the beverage system, and these components are typically exposed to the ambient environment of that site. Often such beverage systems are located in a cellar or cool room that sees a significant amount of activity (e.g. due to delivery and replacement of kegs and storage of other goods). Such environments are therefore not particularly conducive to maintaining such components in an optimal condition. On top of this, and especially in a commercial operation, such systems undergo significant (and constant) use.

This combination of these factors means that the components of the beverage system undergo frequent cleaning, maintenance, and replacement. This can require significant time and can be costly, especially when such maintenance involves removing a component (and therefore shutting down at least a portion of the system).

There is a need to address at least one of the issues described above.

FR2559874A1 proposes a heating device composed of two articulated portions with a heating core and an insulator. DE202010004970U1 proposes an insulating cap for heat insulation and/or cold insulation and an insulating bend for heat insulation and/or cold insulation. US3724491A proposes an insulating shell for a valve made up of a plurality of sections which mate together about the valve and each section has inner and outer skins with insulation material between the skins. Document EP3162757A1 discloses a beverage dispensing system comprising an insulation housing for a FOB detecting unit.

### Summary

The invention is defined by the appended set of claims.

At its broadest, the disclosure provides an enclosure that can accommodate a beverage line and a beverage dispensing system component in individual cavities, and that is openable for access to the beverage line and the beverage dispensing system component.

In a first aspect there is provided an enclosure for housing components of a beverage dispensing system, the enclosure comprising:
a body comprising a plurality of primary recesses;
a lid comprising a plurality of secondary recesses, the lid connectable to the body so as to be configurable between a closed position in which the lid covers the primary recesses, and an open position in which the lid is at least partly separated from the body so as to expose the primary recesses; and
wherein the primary and secondary recesses are arranged such that in the closed position each primary recess cooperates with a corresponding secondary recess to define a cavity, the cavities comprising a beverage line-receiving cavity configured to accommodate a beverage line extending through the enclosure, and a component-receiving cavity configured to accommodate a component of the beverage dispensing system.

Such an arrangement means that a component that may, for example, interact with the beverage line, can be positioned within the enclosure so as to be substantially surrounded by the enclosure when in the closed position. This can help to protect and seal the component from the external environment and can also help to maintain the temperature of the component, which may minimise microorganism growth that could otherwise cause fouling of the component.

The provision of cooperating recesses and an openable lid means that when the lid is in the open position, the component and beverage line held within the cavities are exposed and therefore accessible by an operator (e.g. for cleaning, maintenance and/or removal).

Optional features of the first aspect will now be set out. These are applicable singly or in any combination with any aspect of the invention.

Each primary and secondary recess defining a cavity may be referred to as a recess pair.

The beverage line-receiving cavity may extend through the enclosure (i.e. entirely through the enclosure). The beverage line-receiving cavity may be defined by a first (primary and secondary) recess pair. The primary recess of the first recess pair may be in the form of a channel extending between (and to) opposing ends of the body. The secondary recess of the first recess pair may be in the form of a channel extending between (and to) opposing ends of the lid.

The beverage line-receiving cavity may be elongate (so as to extend along a longitudinal axis thereof). The longitudinal axis of the first cavity may be parallel to an elongate (longitudinal) axis of the enclosure. The beverage line-receiving cavity may have a substantially constant cross-sectional shape along its length (e.g. for the entire length). The beverage line-receiving may have a circular cross-sectional shape. The beverage line-receiving cavity may be cylindrical (e.g. each channel as described above may have a semi-circular cross-sectional shape). The beverage line-receiving cavity may extend substantially centrally through the enclosure.

The enclosure may comprise an inlet (e.g. a beverage inlet) and an outlet (e.g. a beverage outlet). The inlet may be configured for connection to a beverage line (e.g. an insulated beverage line, such as a python) of a beverage system. The outlet may be configured for connection to a beverage line (e.g. an insulated beverage line, such as a python) of a beverage system. The beverage line-receiving cavity may extend from the inlet to the outlet. In this way, the beverage line-receiving cavity may define a flow path through the enclosure.

The component-receiving cavity may be defined by a second (primary and secondary) recess pair. The primary recess of the second recess pair may be configured to form an interference fit with at least a portion of a component of the beverage system. The component may, for example, be one of a pump, valve or gas exchange component. The component may otherwise be e.g. a sensor or controller.

The component-receiving cavity may connect with (e.g. laterally extend from) the beverage line-receiving cavity. The primary recess of the second recess pair may connect with (e.g. laterally extend from) the primary recess of the first recess pair. The secondary recess of the second recess pair may connect with (e.g. laterally extend from) the secondary recess of the first recess pair.

The component-receiving cavity may be open to a rear surface of the enclosure (e.g. via an aperture formed in a rear wall of the enclosure). This may provide for e.g. passage of cables, lines, etc. through the rear wall of the enclosure.

The component-receiving cavity may be configured for receipt of a gas exchange component for a beverage dispense system. In this respect, the component-receiving cavity may be referred to as a gas exchange component-receiving cavity (abbreviated herein as a GEC-receiving cavity). The GEC-receiving cavity may comprise a central portion and one or more branches extending therefrom. The central portion may be configured for receipt of a body of a gas exchange component. The one or more branches may be configured for receipt of conduits extending from the body of the gas exchange component.

The component-receiving cavity may be configured for receipt of a valve (e.g. solenoid valve for closing the beverage line) for a beverage dispense system. In this respect, the component-receiving cavity may be referred to as a valve-receiving cavity.

The component-receiving cavity may be configured for receipt of a flow pump (e.g. for moving beverage along a beverage line). In this respect, the component-receiving cavity may be referred to as a pump-receiving cavity.

The enclosure may comprise a plurality of component-receiving cavities (i.e. defined by further pairs of primary and secondary recesses such as third and fourth recess pairs). That is, the primary and secondary recesses may cooperate to define a plurality of component-receiving cavities. For example, the enclosure may comprise at least two of the GEC-receiving cavity, valve-receiving cavity and pump-receiving cavity as described above. The enclosure may comprise a GEC-receiving cavity and a valve-receiving cavity. The enclosure may comprise each of the GEC-receiving cavity, valve-receiving cavity and pump-receiving cavity as described above.

The plurality of component-receiving cavities may be spaced along the beverage line-receiving cavity. The pump-receiving cavity may be downstream of (i.e. closer to the outlet than) the valve-receiving cavity.

The body and/or the lid may comprise a thermally insulative material (i.e. a material configured to provide thermal insulation). For example, the thermally insulative material may be a plastic foam (e.g. a polypropylene foam). This may facilitate maintenance of temperature of the component.

The body may comprise a housing and an insert receivable in the housing (e.g. receivable in a cavity or hollow of the housing). The primary recesses may be formed in the insert. The insert may comprise the thermally insulative material. The housing may be formed of a harder material than the insert. The housing may comprise ABS plastic. In this way, the housing may protect the insert (i.e. may provide a protective skin). The insert may be removable from the housing (e.g. may be held by way of an interference fit). The insert may comprise thumb/finger recesses (i.e. formed between the insert and the housing) to allow a user to remove the insert from the housing.

The insert may be a unitary structure (i.e. may be an integrally formed single piece). In other embodiments, the insert may be formed of a plurality of elements received in the housing.

The insert may substantially fill the hollow of the housing. For example, the insert may fill more than 50%, or 60% or 70% or 80% of the volume of the hollow.

The lid may comprise a housing and an insert receivable in the housing (e.g. receivable in a cavity or hollow of the housing). In this respect, the housing of the body may be a first housing and the housing of the lid may be a second housing. Likewise, the insert of the body may be a first insert and the insert of the lid may be a second insert. The secondary recesses may be formed in the second insert. The second insert may comprise the thermally insulative material. The second housing may be formed of a harder material than the second insert. The second housing may comprise ABS plastic. The second insert may be removable from the second housing (e.g. may be held by way of an interference fit).

The second insert may be a unitary structure (i.e. may be an integrally formed single piece). In other embodiments, the second insert may be formed of a plurality of elements received in the second housing.

The second insert may substantially fill the hollow of the second housing. For example, the second insert may fill more than 50%, or 60% or 70% or 80% of the volume of the hollow.

Together, the first and second inserts may substantially fill an internal space defined by the first and second housings when in the closed position. For example, the first and second inserts may fill more than 50%, or 60% or 70% or 80% of the internal space defined by the first and second housings when in the closed position.

The body may comprise a first interface surface. The lid may comprise a second interface surface. The first and second interface surfaces may be brought together (so as to be in contact or in close proximity) when the lid is in the closed position. The first and second interface surfaces may be configured to seal against one another. The first and/or second interface surface may be substantially planar. The area of contact between the first and second interface surfaces in the closed position may be greater than 50%, or 60%, or 70%, or 80%, or 90% of a cross-sectional area at a location where the lid and body join. Such an arrangement may facilitate sealing of components held within the enclosure (i.e. by providing large areas of contact between the first and second interface surfaces).

The primary recesses may be formed in the first interface surface. The secondary recesses may be formed in the second interface surface. The first interface surface may be a surface of the first insert. The second interface surface may be a surface of the second insert.

The body may comprise a carrier mounting portion for mounting a beverage line carrier (e.g. python) thereto. The carrier mounting portion may be configured for clamping the carrier to the body (e.g. may comprise a clamp). The mounting portion may comprise, for example, a pair of spaced threaded holes for engagement with a clamp. The body may comprise two of such mounting portions, an inlet mounting portion provided at the inlet (for clamping a beverage line carrier at the inlet) and an outlet mounting portion provided at the outlet (for clamping a beverage line carrier at the outlet).

The body may comprise a fixing portion configured for fixing the body to a structure (e.g. a wall, floor, ceiling, or other structure such as battens). The fixing portion may comprise a bore formed in the body. For example, the fixing portion may comprise a bore extending from the first interface surface to an external (e.g. rear) surface of the body. When the body includes a housing and an insert, the bore may comprise a first portion formed in the insert and a second portion formed in the housing. The first portion may have a larger diameter (or width) than the second portion. In this way, the second portion of the bore may be for receipt of a fastener therethrough and the first portion may provide access to the second portion. Such an arrangement may allow the first casing portion to be fixed to a surface by way of e.g. a fastener without removal of the first insulation arrangement. The body may comprise a plurality of fixing portions, each as described above.

The body may be hingedly connected to the lid. Thus, the enclosure may comprise a hinge connecting the body to the lid. In this way, the enclosure may be configured so as to provide a clamshell arrangement (i.e. each of the lid and body providing a "shell" of the clamshell).

The enclosure may have an obround shape. The enclosure may comprise two parallel spaced side walls connected by two opposing curved ends. The enclosure may be elongate in a direction parallel to the side walls. The enclosure may comprise a planar rear wall. The enclosure may comprise a curved (e.g. convex) front wall. The hinge may be provided on one of the side walls.

The body may comprise indicia adjacent the or each component-receiving recess. The indicia may indicate the component which the respective component-receiving recess is configured to receive. The indicia may be provided on the first interface surface.

The lid may comprise a light emitting device (e.g. an LED). When the lid comprises the second housing, the light emitting device may be disposed within the hollow of the second housing, and the second housing may comprise a light transmitting portion permitting light from the light emitting device to pass through the second housing. The light emitting device may be provided between the second insert and the second housing (i.e. in a space defined between the second insert and the second housing).

In a second aspect there is disclosed a beverage dispensing system comprising:
an enclosure according to the first aspect or according to the fourth aspect; and
a beverage dispensing system component received in the component-receiving cavity.

Optional features of the second aspect will now be set out. These are applicable singly or in any combination with any aspect of the invention.

The component is releasably received in the primary recess defining the component-receiving cavity by way of an interference fit. That is, the primary recess is sized and shaped so as to provide an interference fit with the component. In other words, the component may be held by friction in the primary recess (i.e. such that further fixing of the component to the enclosure may not be required).

A depth of the primary recess defining the component-receiving cavity (e.g. the primary recess of the second pair) may be less than a depth/height of the component. Thus, the component may protrude from the primary recess defining the component-receiving cavity (i.e. in a direction away from the body, or above an interface surface of the body).

The system may comprise a beverage line received in the beverage line-receiving cavity. The beverage line may extend through the enclosure. The system may comprise a beverage source (e.g. keg). The system may comprise a cooler (e.g. ice bank cooler). The beverage line may connect the beverage source to the cooler. The enclosure may be provided between the beverage source and the cooler along the beverage line.

The system may comprise a cooling line received in the beverage line-receiving cavity. The cooling line may extend from the cooler. The cooling line may cool the internal space of the enclosure.

The component may be one of a pump, valve or gas exchange component.

The pump may be a flow pump for moving beverage along the beverage line. Thus, the pump may be fluidly connected to the beverage line.

The valve may be a solenoid valve for closing the beverage line (i.e. preventing beverage flow along the beverage line). The valve may be configured to close the beverage line in response to a signal from a sensor configured to detect when a keg connected to the beverage line is empty or nearly empty (e.g. a FOB detecting sensor). The valve may therefore be fluidly connected to the beverage line. The valve may be connectable or connected to a discharge line. The valve may be configured to direct beverage to the discharge line when it receives a signal from the sensor.

The gas exchange component may be configured to receive gas from a primary gas line of the beverage dispensing system and to provide that gas (e.g. at reduced pressure) to a keg connected to the beverage line for moving beverage along the beverage line.

The system may comprise a valve (as described above) and a gas exchange component (as described above), each received within a respective component-receiving cavity. The system may further comprise a pump as described above (received in a further component-receiving cavity). The pump may be downstream of the valve.

The component may be connectable to one or more cables for power and/or control signals. The component may comprise a connector for releasable connection the one or more cables. This may facilitate simple removal of the component from the enclosure (and likewise, simple installation).

The enclosure may be mounted to a wall via battens. For example, the enclosure may be mounted to first and second vertically space battens. In this way, the battens may space a rear surface of the enclosure from the wall (e.g. for passage of cables and/or gas lines). A horizontal channel may be defined between the battens (e.g. for passage of cables and/or gas lines along the wall). A cover may be provided that spans the battens so as to enclose the horizontal channel.

For the avoidance of doubt, the beverage system, enclosure and/or component of the second aspect may be as otherwise described above with respect to the first aspect.

In a third aspect there is disclosed a beverage dispensing system, the system comprising:
an enclosure comprising:
   a body comprising first and second recesses;
   a lid connectable to the body so as to be configurable between a closed position in which the lid covers the recesses to enclose the recesses, and an open position in which the lid is at least partly separated from the body so as to expose the recesses;
a first beverage dispensing system component releasably held in the first recess of the body by way of an interference fit; and
a second beverage dispensing system component releasably held in the second recess of the body by way of an interference fit.

Such an arrangement allows for the components to be protected within the enclosure while also allowing convenient installation and removal of the components (i.e. without needing mechanical fastening of the components).

Optional features of the third aspect will now be set out. These are applicable singly or in any combination with any aspect of the invention.

The first and second components may protrude from the respective first and second recesses (i.e. in a direction away from the body). In this way, the first and second components may be more accessible.

The first and second recesses may be primary recesses and the lid may comprise first and second secondary recesses that cooperate with the primary recesses when the lid is in the closed position so as to define first and second component-receiving cavities.

Each primary and/or secondary recess may be as described above with respect to the first and second aspects. Each component-receiving cavity may be as described above with respect to the first and second aspects. Likewise, each component may be as described above with respect to the first and second aspects.

The enclosure may comprise a third pair of primary and secondary recesses, which may cooperate to define a beverage line-receiving cavity. The beverage line-receiving cavity may be as described above with respect to the first aspect.

The system of the third aspect may be as otherwise described above with respect to the second aspect.

In a fourth aspect there is provided an enclosure for housing a component of a beverage dispensing system, the enclosure comprising:
a body comprising a primary recess;
a lid comprising a secondary recess the lid connectable to the body so as to be configurable between a closed position in which the lid covers the primary recess, and an open position in which the lid is at least partly separated from the body so as to expose the primary recess; and
wherein the primary and secondary recesses are arranged such that in the closed position the primary recess cooperates with the secondary recess to define a cavity configured to accommodate a component of the beverage dispensing system.

Optional features of the fourth aspect will now be set out. These are applicable singly or in any combination with any aspect of the invention.

The primary and secondary recesses may be a first recess pair and the enclosure may comprise a second recess pair that cooperate to define a beverage line-receiving cavity.

The enclosure of the fourth aspect may be otherwise as described above with respect to the first aspect. For example, beverage line-receiving cavity and the component-receiving cavity may be the same as the beverage line-receiving cavity and the component-receiving cavity of the first aspect.

### Brief Description of the Drawings

Embodiments will now be discussed with reference to the accompanying figures in which:
Figure 1A is a side view of an enclosure of a beverage dispensing system in a closed position;
Figure 1B is a front view of the enclosure of Figure 1A;
Figure 1C is a perspective view of the enclosure of Figure 1A in an open position;
Figures 2A and 2B are perspective views of a body of an enclosure that is a variation of the enclosure of Figure 1A; and
Figures 2C and 2D are perspective view of a first insert for receipt in the body of Figure 2A.

### Detailed Description

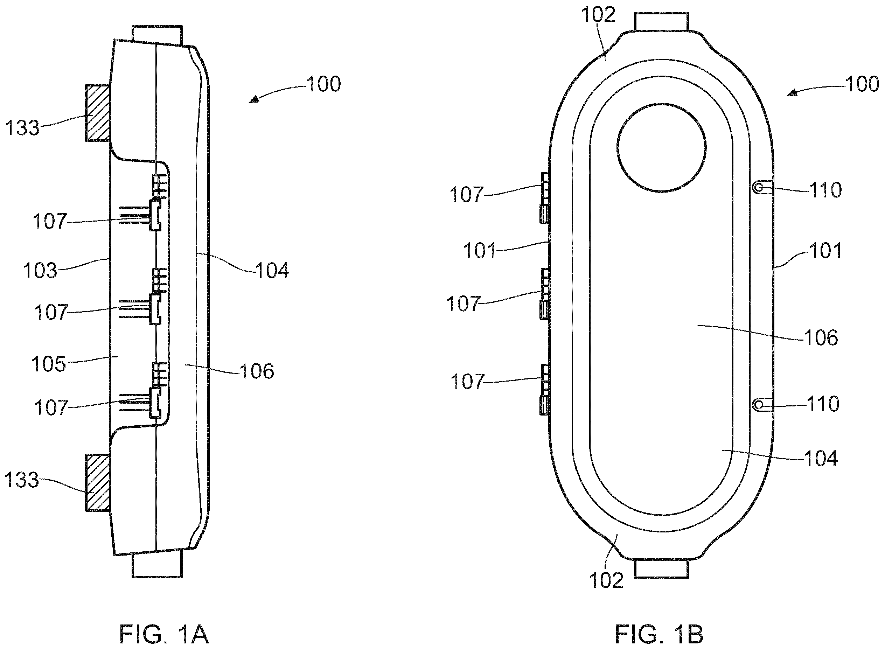

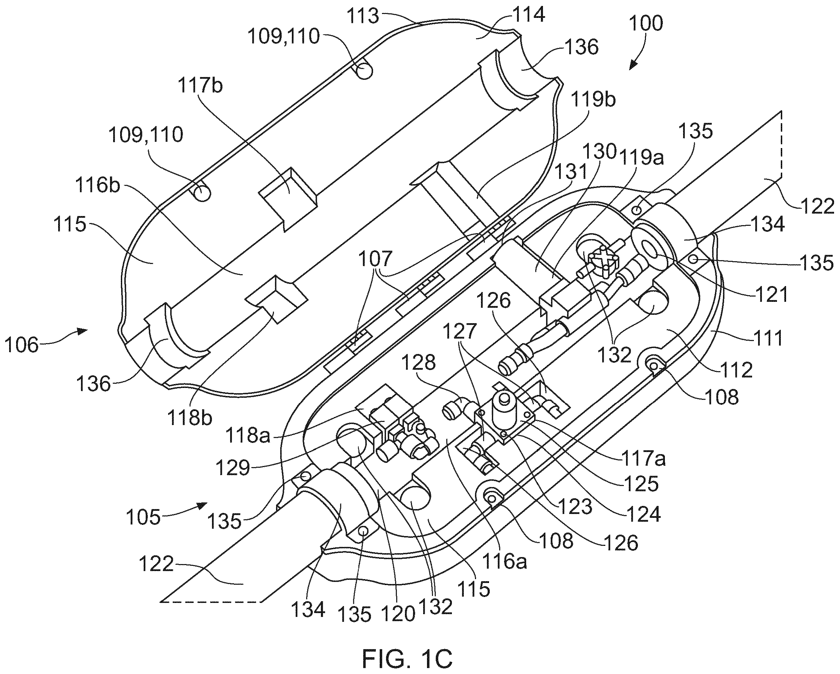

Figures 1A, 1B and 1C illustrates an enclosure 100 that houses components of a beverage dispensing system (which in the illustrated embodiment is a beer dispensing system). The enclosure 100 has an obround shape and includes two parallel elongate side walls 101 connected by opposing rounded end walls 102. A rear wall 103 of the enclosure is substantially planar, while the opposing front wall 104 has a curved (convex) form.

The enclosure 100 comprises a body 105 and a lid 106. The lid 106 is connectable to the body 105 so as to be configurable between a closed position (as illustrated in figures 1A and 1B) and an open position (as is illustrated in Figure 1C).

In particular, the lid 105 and body 106 are connected along one of the two elongate walls 101 of the enclosure by way of hinges 107. In this way, the lid 106 is able to pivot relative to the body 105 between the closed and open position. Accordingly, the enclosure 100 has a clamshell configuration.

To retain the lid 106 in the closed position, the body 105 includes two threaded bores 108 (on a side of the enclosure opposite the hinges 107), and the lid 106 includes two spaced apertures 109 that align with the threaded bores 108 in the closed position. Fasteners, in the form of captive threaded screws 110 are received in the aligned apertures 109 and threaded bores 108 to hold the lid 106 against the body 105.

The clamshell configuration of the enclosure 100 is particularly evident from Figure 1C. In this figure, the enclosure 100 is in the open position so that the interior of the enclosure 100 is visible. As is apparent, the body 105 is formed of a first housing 111 and a first insert 112 received in (and substantially fills) a hollow of the first housing 111. The first insert 112 is formed of an insulative material (in this case polypropylene foam) and the first housing 111 is formed of a harder material (ABS plastic) so as to act as a protective layer for the first insert 112.

Similar to the body 105, the lid 106 is formed of a second housing 113 and a second insert 114 received in (and substantially filling) a hollow of the second housing 113. The second housing 113 and second insert 114 are formed of the same materials as the first housing 111 and first insert 112. When the enclosure 100 is in the closed position, the first 111 and second 113 housings define an external surface of the enclosure 100 so as to completely enclose the first 112 and second 114 inserts. Together, the first 112 and second 114 inserts substantially fill a space enclosed by the first 111 and second 113 housings.

Each of the first 112 and second 114 inserts is a unitary structure (i.e. is formed of a single piece of insulative material). This simplifies construction of the enclosure 100.

Each insert 112, 114 includes a planar interface surface 115 that is exposed in the open position. In the closed position, these interface surfaces 115 are brought together (so as to be in contact or proximate one another). These surfaces 115 help to seal components stored in the enclosure from the external environment. As will be explained further below, the interior of the enclosure is cooled in operation and introduction of ambient air would otherwise result in condensation that could cause damage to components and/or promote microorganism growth.

The first insert 112 includes a plurality of primary recesses and the second insert 114 includes a plurality of secondary recesses. These recesses are formed in the interface surfaces 115 of the inserts 112, 114. The first insert 112 includes first 116a, second 117a, third 118a and fourth 119a primary component receiving recesses. Likewise, the second insert includes first 116b, second 117b, third 118b and fourth 119b secondary component receiving recesses. As may be appreciated, each of the primary recesses 116a-119a cooperates with (i.e. aligns with) a corresponding secondary recess 116b-119b when the enclosure 100 is in the closed position, defining a recess pair, and forming a corresponding component receiving cavity.

The first pair of recesses 116a, 116b are each elongate channels that cooperate to define an elongate cylindrical beverage line-receiving cavity that extends centrally and longitudinally (i.e. along the elongate axis of the enclosure 100) through the enclosure 100. In particular, the cavity defined by these recesses extends from an inlet 120 (into which beverage flows in the use) of the enclosure to an outlet 121 (from which the beverage flows in use). As is apparent from the figure, each of the inlet 120 and the outlet 121 are configured for connection to an insulated carrier in the form of a python 122. In the illustrated embodiment, the python 122 connected to the inlet 120 carries a beverage line, a gas line, and a cooling line (none of which are illustrated for clarity) to a beverage source (e.g. keg). The python 122 connected to the outlet 121 carries a beverage line and a cooling line to a cooler of the beverage dispensing system.

The second pair of recesses 117a, 117b cooperate to define a gas exchange component receiving-cavity (abbreviated herein as GEC-receiving cavity) that is configured for receipt of a gas exchange component 123 of the beverage dispense system. The primary recess 117a of this second pair of recesses 117a, 117b comprises a central portion 124 for receipt of a body 125 of the gas exchange component 123 and two L-shaped branches 126 extending outwardly from the central portion 124 to accommodate gas flow conduits 127 of the gas exchange component 123. Although not apparent from the figure, each of the branches 126 of this primary recess 117a align with apertures in the rear side of the first housing 111 to allow connection of the gas flow conduits 127 to a primary gas line of the beverage dispensing system. The GEC-receiving cavity connects laterally to the beverage line receiving cavity (likewise, the second pair of recesses 117a, 117b respectively connect to the first pair of recesses 116a, 116b). In this way, a third conduit 128 of the gas exchange component 123 is able to extend into the beverage line receiving cavity for connection to a gas line (not shown) that passes along the python 122 to a keg of the beverage system.

The primary recess 117a of this second pair of recesses 117a, 117b is, in particular, configured to retain the gas exchange component 123 therein by way of an interference fit. Not only does this minimise any movement of the gas exchange component 123 in use, but it means that the gas exchange component 123 does not have to be affixed to the enclosure 100 (or any other structure) by any other means (such as by mechanical fastener). This greatly simplifies, and increases the speed of, replacement of the gas exchange component 123 or its removal for maintenance.

Likewise, the depth of the primary recess 117a of this second pair of recesses 117a, 117b is such that a substantial portion of the gas exchange component 123 extends beyond the recess 117a when the enclosure 100 is in the open position (i.e. the lid 106 is hinged open). This means a substantial portion of the gas exchange component 123 is accessible, such as for gripping for removal, for in-situ maintenance, or for visual assessment.

The third pair of recesses 118a, 118b cooperate to define a cuboid-shaped valve-receiving cavity that is configured (i.e. shaped and sized) to accommodate a portion of a solenoid valve 129 forming part of the beverage system. Like the GEC-receiving cavity, the valve-receiving cavity is configured to retain the valve 129 therein by way of an interference fit. Thus, again, the valve 129 can be installed in the enclosure 100 without requiring any further fastening means (and can thus be removed without needing to disengage any such means).

The valve-receiving cavity is connected laterally to the beverage line-receiving cavity and is upstream of (i.e. closer to the inlet 120 than) the GEC-receiving cavity. The solenoid valve 129 extends partway into the beverage line receiving cavity and is connected to a first portion of the beverage line (not shown) that extends from the valve 129 to the keg. The valve 129 is also operatively connectable to a sensor for detecting when the keg is empty (or nearly empty) and is configured to close the beverage line upon receipt of a signal from the sensor. Although not apparent from the figure, to allow for this electrical connection and to allow for power to be provided to the valve, the primary recess of the third pair of recesses is open to the rear wall 103 of the enclosure 100 and is aligned with apertures for passage of electrical cables.

The fourth pair of recesses 119a, 119b cooperate to define a cuboid-shaped pump-receiving cavity that is configured to accommodate a portion of a flow pump 130 of the beverage dispensing system. Again, the primary recess 119a of this recess pair 119a, 119b is configured to provide an interference fit with the flow pump 130 for simple installation and removal of the flow pump 130 when the enclosure 100 is in the open position.

The pump-receiving cavity connects to the beverage line-receiving cavity (and laterally extends therefrom) and is positioned downstream of (i.e. closer to the outlet 121 than) both the GEC-receiving cavity and the valve-receiving cavity. A distal end 131 of the pump-receiving cavity (i.e. distal from its connection to the beverage line-receiving cavity) is open to one of the side walls 101 of the enclosure 100, at a point where the side wall 101 has a reduced thickness. This allows the accommodation of the pump 130 without increasing the size of the enclosure 100, and also facilitates transfer of heat away from the pump (through the side wall 101 of the enclosure 100).

A portion of the flow pump 130 extends into the beverage line-receiving cavity. This portion of the pump 130 is fluidly connected downstream of the solenoid valve 129 by way of a second portion of the beverage line (not shown). The flow pump 130 is also connected to a third portion of the beverage line (not shown) that extends from the flow pump 130 and to a cooler via the python 122 connected at the outlet 121 of the enclosure 100. In this way, beverage passes from the solenoid valve 129 (when open) to the pump 130, which drives the beverage through the beverage line through the cooler and ultimately to a dispensing tap for dispensing. Like the other component-receiving cavities, the pump-receiving cavity (i.e. the primary recess 119a) is open to the rear wall 103 of the enclosure 100 where it aligns with an aperture for passage of electrical cables for power and control of the pump 130.

Also provided in the first insert 112 are four fixing recesses 132, two disposed towards each end wall 102 of the enclosure. Each fixing recess 132 is in the form of a cylindrical bore extending into the interface surface 115 of the first insert 112. The fixing recesses 132 each align with a corresponding fixing aperture formed in the rear wall 103 of the enclosure (i.e. in the first housing 111). This allows the enclosure 100 to be fixed to a structure (such as a wall, ceiling or floor) by way of fasteners extending through the fixing recesses 132 and the corresponding apertures. As is illustrated in Figure 1A, this fixing may be provided via battens 133 that are in turn fixed to e.g. a wall. This creates a space behind the enclosure 100 in which cables, gas lines, etc. can be received.

To mount the pythons 122 to the enclosure 100, the enclosure 100 further includes clamps 134 that mount to the first housing 111 via threaded bores 135 provided at the inlet 120 and the outlet 121 (together, the clamps 134 and bores 135 define mounting portions of the enclosure 100). To improve the seal at the inlet 120 and the outlet 121, the second insert 114 includes clamp-receiving recesses 136 configured to receive the clamps 134.

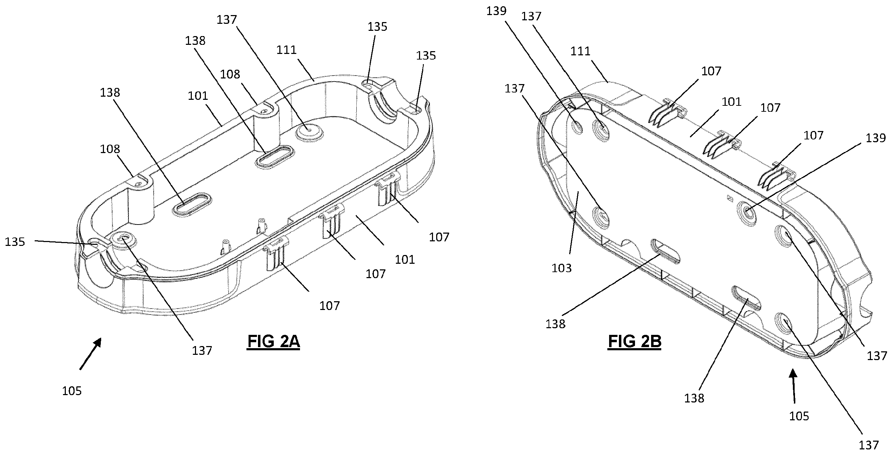

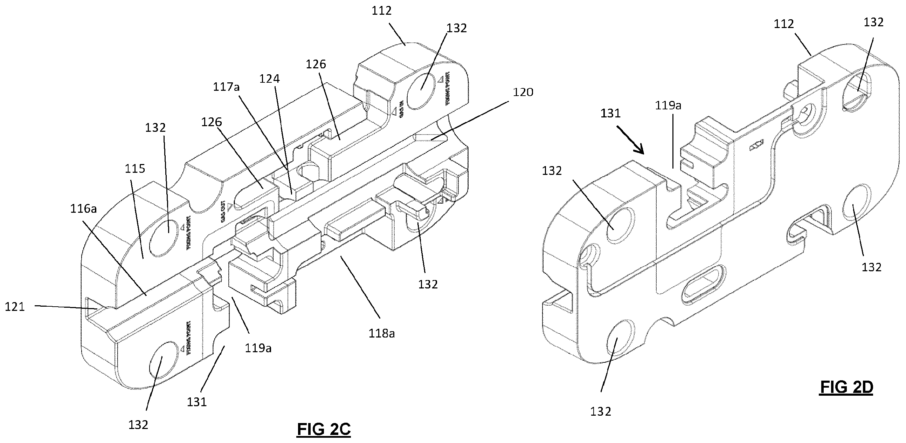

Figures 2A, 2B, 2C and 2D illustrate a variation of the embodiment described above. Many of the same features are present in this variation and so have been given the same reference numerals. Features that are the same will not been described further.

Figures 2A and 2B illustrate the first housing 111 without the first insert 112 received therein. Figures 2C and 2D illustrate the first insert 112 removed from the first housing 111. As can be seen from these figures, the rear wall 103 of the housing 111 includes four fixing apertures 137. In particular, each fixing aperture 137 is formed in a boss that projects into the hollow of the first housing 111. These align with the corresponding fixing recesses 132 (which have a greater diameter than the fixing recesses 137) of first insert 112, when the first insert 112 is received in the first housing 111. In this way, the enclosure can be mounted to a surface by receipt of fasteners through the fixing aperture 137 (access being provided by the fixing recesses 132).

Also apparent from this figure are two elongate gas line apertures 138 formed in the rear wall 103 and that align with the branches 126 of the primary recess 117a defining the GEC-receiving cavity when the first insert 112 is received in the first housing 111. These apertures 138 allow for passage of gas lines to and from a gas exchange component when received in the GEC-receiving cavity. Also apparent, in relation to the GEC-receiving cavity, is that one of the branches 126 extends to a side wall of the first housing.

Similarly, the rear wall 103 also includes cable apertures 139 that align with the third 118a and fourth 119a primary recesses so as to provide for cable access for each of a pump and valve when received in the enclosure.

The exemplary embodiments set forth above are considered to be illustrative and not limiting. Various changes to the described embodiments may be made without departing from scope of the invention as defined in the appended claims.

For example, although not described above, a light emitting device, such as an LED, could be provided between the second housing and the second insert for emitting light through a portion of the second housing (i.e. defining a front surface of the enclosure).

For the avoidance of any doubt, any theoretical explanations provided herein are provided for the purposes of improving the understanding of a reader. The inventors do not wish to be bound by any of these theoretical explanations.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A beverage dispensing system comprising:
an enclosure (100) for housing components of the beverage dispensing system, the enclosure comprising:
a body (105) comprising a plurality of primary recesses (116a 117a, 119a);
a lid (106) comprising a plurality of secondary recesses (116b, 117b, 119b), the lid connectable to the body so as to be configurable between a closed position in which the lid covers the primary recesses, and an open position in which the lid is at least partly separated from the body so as to expose the primary recesses; and
wherein the primary and secondary recesses are arranged such that in the closed position each primary recess cooperates with a corresponding secondary recess to define a cavity, the cavities comprising a beverage line-receiving cavity configured to accommodate a beverage line extending through the enclosure, and a component-receiving cavity configured to accommodate a component of the beverage dispensing system; and
a beverage dispensing system component (123, 129, 130) received in the component-receiving cavity of the enclosure;
**characterised in that** the beverage dispensing system component is releasably received in the primary recess defining the component-receiving cavity by way of an interference fit, the primary recess being sized and shaped so as to provide the interference fit with the beverage dispensing system component.

2. The beverage dispensing system according to claim 1 wherein the beverage line-receiving cavity extends through the enclosure from an inlet to an outlet.

3. The beverage dispensing system according to claim 2 wherein mounting portions are provided at the inlet (120) and the outlet (121) for mounting beverage line carriers thereto.

4. The beverage dispensing system according to any one of the preceding claims wherein the component-receiving cavity is connected to the beverage line-receiving cavity.

5. The beverage dispensing system according to any one of the preceding claims wherein the primary and secondary recesses cooperate to define a plurality of component-receiving cavities spaced along the beverage line-receiving cavity.

6. The beverage dispensing system according to any one of the preceding claims wherein the body and/or lid comprises a thermally insulative material.

7. The beverage dispensing system according to any one of the preceding claims wherein the body comprises a first housing (111) and a first insert (112) receivable in a hollow of the first housing the primary recesses formed in the first insert.

8. The beverage dispensing system according to claim 7 wherein the first housing is formed of a harder material than the first insert.

9. The beverage dispensing system according to claim 7 or 8 wherein the first insert is a unitary structure.

10. The beverage dispensing system according to any one of claims 7 to 9 wherein the lid comprises a second housing (113) and a second insert (114) receivable in the second housing.

11. The beverage dispensing system according to any one of the preceding claims wherein the body comprises a first interface surface and the lid comprises a second interface surface, the interface surfaces brought together when the lid is in the closed position.

12. The beverage dispensing system according to any one of the preceding claims comprising a hinge (107) connecting the lid to the body.

13. The beverage dispensing system according to any one of the preceding claims comprising a beverage line received in the beverage line-receiving cavity, the beverage line connecting a beverage source to a cooler and the enclosure provided between the beverage source and the cooler along the beverage line.

14. The beverage dispensing system according to claim 13 comprising a cooling line received in the beverage line-receiving cavity, the cooling line extending from the cooler.

15. The beverage dispensing system according to any one of the preceding claims wherein the component is a pump (130), valve (129) or gas exchange component (123).

## Patentansprüche

1. Getränkeabgabesystem, umfassend:
eine Einhausung (100) zum Aufnehmen von Komponenten des Getränkeabgabesystems, wobei die Einhausung Folgendes umfasst:
einen Körper (105), umfassend eine Vielzahl von primären Aussparungen (116a, 117a, 119a);
einen Deckel (106), umfassend eine Vielzahl von sekundären Aussparungen (116b, 117b, 119b), wobei der Deckel mit dem Körper verbindbar ist, um zwischen einer geschlossenen Position, in der der Deckel die primären Aussparungen bedeckt, und einer offenen Position, in der der Deckel zumindest teilweise vom Körper gelöst ist, um die primären Aussparungen freizulegen, konfigurierbar ist; und
wobei die primären und die sekundären Aussparungen so angeordnet sind, dass in der geschlossenen Position jede primäre Aussparung mit einer entsprechenden sekundären Aussparung zusammenwirkt, um einen Hohlraum zu definieren, wobei die Hohlräume einen Getränkeleitungsaufnahmehohlraum, der dazu ausgelegt ist, eine Getränkeleitung aufzunehmen, welche sich durch die Einhausung erstreckt, und einen Komponentenaufnahmehohlraum definieren, der dazu ausgelegt ist, eine Komponente des Getränkeabgabesystems aufzunehmen; und
eine Getränkeabgabesystemkomponente (123, 129, 130), die im Komponentenaufnahmehohlraum der Einhausung aufgenommen ist;
**dadurch gekennzeichnet, dass** die Getränkeabgabesystemkomponente lösbar in der primären Aussparung, welche den Komponentenaufnahmehohlraum definiert, mittels einer Presspassung lösbar aufgenommen ist, wobei die primäre Aussparung derart bemessen und geformt ist, dass sie die Presspassung mit der Getränkeabgabesystemkomponente bereitstellt.

2. Getränkeabgabesystem nach Anspruch 1, wobei der Getränkeleitungsaufnahmehohlraum sich von einem Einlass bis zu einem Auslass durch die Einhausung erstreckt.

3. Getränkeabgabesystem nach Anspruch 2, wobei Montageabschnitte am Einlass (120) und am Auslass (121) bereitgestellt sind, um Getränkeleitungsträger daran anzubringen.

4. Getränkeabgabesystem nach einem der vorangegangenen Ansprüche, wobei der Komponentenaufnahmehohlraum mit dem Getränkeleitungsaufnahmehohlraum verbunden ist.

5. Getränkeabgabesystem nach einem der vorangegangenen Ansprüche, wobei die primären und die sekundären Aussparungen zusammenwirken, um eine Vielzahl von Komponenten aufnehmenden Hohlräumen zu definieren, die entlang des Getränkeleitungsaufnahmehohlraums angeordnet sind.

6. Getränkeabgabesystem nach einem der vorangegangenen Ansprüche, wobei der Körper und/oder der Deckel ein wärmeisolierendes Material umfasst/umfassen.

7. Getränkeabgabesystem nach einem der vorangegangenen Ansprüche, wobei der Körper ein erstes Gehäuse (111) und einen ersten Einsatz (112) umfasst, der in einer Vertiefung des ersten Gehäuses aufnehmbar ist, wobei die primären Aussparungen im ersten Einsatz ausgebildet sind.

8. Getränkeabgabesystem nach Anspruch 7, wobei das erste Gehäuse aus einem härteren Material besteht als der erste Einsatz.

9. Getränkeabgabesystem nach Anspruch 7 oder 8, wobei der erste Einsatz eine Einheitsstruktur ist.

10. Getränkeabgabesystem nach einem der Ansprüche 7 bis 9, wobei der Deckel ein zweites Gehäuse (113) und einen zweiten Einsatz (114), der im zweiten Gehäuse aufnehmbar ist, umfasst.

11. Getränkeabgabesystem nach einem der vorangegangenen Ansprüche, wobei der Körper eine erste Grenzfläche umfasst und der Deckel eine zweite Grenzfläche umfasst, wobei die Grenzflächen zusammengebracht sind, wenn sich der Deckel in der geschlossenen Position befindet.

12. Getränkeabgabesystem nach einem der vorangegangenen Ansprüche, umfassend ein Gelenk (107), das den Deckel mit dem Körper verbindet.

13. Getränkeabgabesystem nach einem der vorangegangenen Ansprüche, umfassend eine Getränkeleitung, die im Getränkeleitungsaufnahmehohlraum aufgenommen ist, wobei die Getränkeleitung eine Getränkequelle mit einem Kühler verbindet und die Einhausung zwischen der Getränkequelle und dem Kühler entlang der Getränkeleitung bereitgestellt ist.

14. Getränkeabgabesystem nach Anspruch 13, umfassend eine Kühlleitung, die im Getränkeleitungsaufnahmehohlraum aufgenommen ist, wobei die Kühlleitung sich vom Kühler weg erstreckt.

15. Getränkeabgabesystem nach einem der vorangegangenen Ansprüche, wobei die Komponente eine Pumpe (130), ein Ventil (129) oder eine Gasaustauschkomponente (123) ist.

## Revendications

1. Système de distribution de boisson, comprenant :
une enceinte (100) pour loger des composants du système de distribution de boisson, l'enceinte comprenant :
un corps (105) comprenant une pluralité d'évidements primaires (116a, 117a, 119a) ;
un couvercle (106) comprenant une pluralité d'évidements secondaires (116b, 117b, 119b), le couvercle pouvant être relié au corps de manière à pouvoir être configuré entre une position fermée dans laquelle le couvercle recouvre les évidements primaires, et une position ouverte dans laquelle le couvercle est au moins partiellement séparé du corps de manière à exposer les évidements primaires ; et
dans lequel les évidements primaire et secondaire sont agencés de telle sorte que dans la position fermée, chaque évidement primaire coopère avec un évidement secondaire correspondant pour définir une cavité, les cavités comprenant une cavité de réception de ligne de boisson configurée pour recevoir une ligne de boisson s'étendant à travers l'enceinte, et une cavité de réception de composant configurée pour recevoir un composant du système de distribution de boisson ; et
un composant de système de distribution de boisson (123, 129, 130) reçu dans la cavité de réception de composant de l'enceinte ;
**caractérisé en ce que** le composant de système de distribution de boisson est reçu de manière libérable dans l'évidement primaire définissant la cavité de réception de composant au moyen d'un ajustement serré, l'évidement primaire étant dimensionné et mis en forme de manière à fournir l'ajustement serré avec le composant de système de distribution de boisson.

2. Système de distribution de boisson selon la revendication 1, dans lequel la cavité de réception de ligne de boisson s'étend à travers l'enceinte depuis une entrée vers une sortie.

3. Système de distribution de boisson selon la revendication 2, dans lequel des parties de montage sont prévues au niveau de l'entrée (120) et de la sortie (121) pour y monter des supports de ligne de boisson.

4. Système de distribution de boisson selon l'une quelconque des revendications précédentes, dans lequel la cavité de réception de composant est reliée à la cavité de réception de ligne de boisson.

5. Système de distribution de boisson selon l'une quelconque des revendications précédentes, dans lequel les évidements primaires et secondaires coopèrent pour définir une pluralité de cavités de réception de composant espacées le long de la cavité de réception de ligne de boisson.

6. Système de distribution de boisson selon l'une quelconque des revendications précédentes, dans lequel le corps et/ou le couvercle comprennent un matériau thermiquement isolant.

7. Système de distribution de boisson selon l'une quelconque des revendications précédentes, dans lequel le corps comprend un premier logement (111) et un premier insert (112) pouvant être reçu dans un creux du premier logement, les évidements primaires étant formés dans le premier insert.

8. Système de distribution de boisson selon la revendication 7, dans lequel le premier logement est formé d'un matériau plus dur que le premier insert.

9. Système de distribution de boisson selon la revendication 7 ou 8, dans lequel le premier insert est une structure unitaire.

10. Système de distribution de boisson selon l'une quelconque des revendications 7 à 9, dans lequel le couvercle comprend un second logement (113) et un second insert (114) pouvant être reçu dans le second logement.

11. Système de distribution de boisson selon l'une quelconque des revendications précédentes, dans lequel le corps comprend une première surface d'interface et le couvercle comprend une seconde surface d'interface, les surfaces d'interface étant rapprochées lorsque le couvercle est dans la position fermée.

12. Système de distribution de boisson selon l'une quelconque des revendications précédentes, comprenant une articulation (107) reliant le couvercle au corps.

13. Système de distribution de boisson selon l'une quelconque des revendications précédentes, comprenant une ligne de boisson reçue dans la cavité de réception de ligne de boisson, la ligne de boisson reliant une source de boisson à un refroidisseur et l'enceinte étant prévue entre la source de boisson et le refroidisseur le long de la ligne de boisson.

14. Système de distribution de boisson selon la revendication 13, comprenant une ligne de refroidissement reçue dans la cavité de réception de ligne de boisson, la ligne de refroidissement s'étendant à partir du refroidisseur.

15. Système de distribution de boisson selon l'une quelconque des revendications précédentes, dans lequel le composant est une pompe (130), une vanne ou un composant d'échange de gaz (123).
